# FASCICULE DE BREVET EUROPEEN

(11) **EP 2 875 601 B1**
(45) Date de publication et mention de la délivrance du brevet: **29.11.2017**
(21) Numéro de dépôt: 13747517.4
(22) Date de dépôt: 14.06.2013
(51) Int. Cl.: H04H 20/12, H04H 20/67

(54) **PROCÉDÉ DE TRANSMISSION PAR DIFFUSION OPTIMALE SUR UN RÉSEAU DU TYPE À FRÉQUENCE UNIQUE**
VERFAHREN ZUR ÜBERTRAGUNG DURCH OPTIMALE VERBREITUNG ÜBER EIN MONOFREQUENZNETZ
METHOD FOR TRANSMISSION BY OPTIMAL DIFFUSION OVER A SINGLE FREQUENCY NETWORK

(30) Priorité: 19.07.2012 FR 1257010
(43) Date de publication de la demande: 27.05.2015
(73) Titulaire: TDF, 92541 Montrouge Cedex (FR)
(72) Inventeur: TORMOS, Mokhtar, 92400 Courbevoie (FR); BRETILLON, Pierre, 38240 Meylan (FR); TANOUGAST, Camel, 57950 Montigny-les-metz (FR); DANDACHE, Abbas, 57070 Metz (FR)
(74) Mandataire: Gevers & Orès
(86) Numéro de dépôt international: PCT/IB2013/054889
(87) Numéro de publication internationale: WO 2014/013359

(56) Documents cités:
- US-A1- 2011 069 772
- NICOLAS CORNILLET ET AL: "Performance of the DVB-T2 system in a Single Frequency Network: Analysis of the distributed alamouti scheme", BROADBAND MULTIMEDIA SYSTEMS AND BROADCASTING (BMSB), 2011 IEEE INTERNATIONAL SYMPOSIUM ON, IEEE, 8 juin 2011 (2011-06-08), pages 1-4, XP031894679, DOI: 10.1109/BMSB.2011.5954961 ISBN: 978-1-61284-121-2
- TORMOS M ET AL: "Performance evaluation for different MISO - SFN network combinations for DVB-T2 standard", BROADBAND MULTIMEDIA SYSTEMS AND BROADCASTING (BMSB), 2011 IEEE INTERNATIONAL SYMPOSIUM ON, IEEE, 8 juin 2011 (2011-06-08), pages 1-4, XP031894638, DOI: 10.1109/BMSB.2011.5954920 ISBN: 978-1-61284-121-2

## Description

La présente invention a pour objet un procédé de transmission en mode diffusion (c'est-à-dire « point vers multipoint ») faisant le meilleur usage possible (dit « optimal ») de la ressource spectrale utilisée, dans le contexte d'un réseau du type à fréquence unique - ou isofréquence - SFN ("Single Frequency Network"). L'invention a également pour objet un récepteur de test, une tête de réseau et une unité de gestion de mobilité pour la mise en oeuvre d'un tel procédé.

Dans un réseau de diffusion du type à fréquence unique (dit SFN), toutes les antennes (émetteurs) utilisent la même fréquence de manière coordonnée, afin de concourir à acheminer un même *message.* Pour autant, chaque antenne émet un *signal* selon un procédé de traitement du message (modulation) qui lui est propre, mais toujours en coordination avec les autres antennes. On nomme ici « *configuration* de transmission », « *configuration* d'émission », ou encore « *configuration* réseau » une combinaison particulière des modulations mises en oeuvre de manière coordonnée sur l'ensemble des antennes d'émission d'un réseau SFN, ou sur un sous-ensemble des antennes de ce réseau SFN. Un cas particulier est que la modulation appliquée à chaque antenne peut être identique : il n'existe alors qu'une seule « *configuration* de transmission ».

Il convient de noter que selon les choix effectués lors de la conception du réseau de diffusion SFN, les différentes antennes le constituant peuvent être soit chacune sur des sites géographiquement différents (on parle alors de MISO ou MIMO *distribué*)*,* soit rassemblées par petits groupes sur un même site géographique (généralement entre 2 et 4 antennes, MISO ou MIMO *co-localisé*)*.* Le procédé selon l'invention s'applique indifféremment aux deux cas ; toutefois le mode privilégié dans les modes de réalisation est le mode distribué.

Le document US-A-2011/069772 décrit un procédé de transmission par diffusion optimale sur un réseau de type à fréquence unique SFN, dans lequel une pluralité d'émetteurs émettent des signaux vers des récepteurs selon une configuration d'émission, parmi une pluralité de configurations d'émission. Il décrit notamment un système de transmission sans fil de type MIMO, où les données sont utilisées et sélectionnées suivant plusieurs modes spécifiques, sans effectuer une sélection optimale des configurations de transmission sous-jacentes.

Le principe de l'invention est de déterminer au moins une configuration de transmission optimale à un instant donné ou sur une période de temps, cette configuration optimale pouvant ou non être mise en oeuvre sur le réseau par une action de rétroaction (ou « feedback »).

Un premier réseau de type SFN est le réseau de télévision numérique selon le standard DVB-T, plus particulièrement pris en son évolution de deuxième génération DVB-T2.

Le standard DVB-T2 présente en effet un certain nombre d'options dont l'une est le codage spatial en fréquence MISO (Multiple Input Single Output) Alamouti selon lequel il existe deux modulations possibles : transmettre les symboles (ou message) tels quels, ou transmettre le conjugué inverse des symboles. Quelle que soit la modulation appliquée à une antenne donnée, l'émission de toutes les antennes est coordonnée en temps et en fréquence, comme en DVB-T.

Un autre réseau de ce type est selon le standard LTE eMBMS/MBSFN de service de téléphonie cellulaire 4G.

Le réseau LTE (Long Term Evolution) est connu sous l'appellation E-UTRA (Evolved Universal Terrestrial Radio Access). LTE offre la possibilité d'une modulation par codage spatial / temporel ou spatial / fréquentiel MIMO (Multiple Input Single Output) selon lequel une multiplicité d'antennes de transmission et de réception sont définis. Il est notable que MISO est un cas particulier de MIMO, MISO se limitant en principe à une seule antenne de réception.

Selon le standard LTE dans sa version eMBMS/MBSFN, les transmissions eMBMS ("enhanced Multimedia Broadcast Multicast Service") peuvent être mises en oeuvre dans un réseau E-UTRA sur une seule cellule ("single-cell") ou préférentiellement sur plusieurs cellules ("multi-cell") utilisant la même fréquence d'émission (mode MBSFN : Multicast-Broadcast Single Frequency Network). Dans le cas préféré d'une transmission MBSFN sur plusieurs cellules, les émissions des cellules sont synchronisées pour permettre au terminal de recombiner l'énergie provenant des transmissions multiples et reconstruire le message transmis par le réseau. Le réseau E-UTRAN est à même de configurer quelles cellules font partie du réseau SFN pour la transmission d'un service eMBMS donné. En revanche, bien que LTE offre la possibilité d'utiliser MIMO, le mode LTE-eMBMS/MBSFN ne le permet pas à ce jour ; une seule et unique modulation est donc appliquée à toutes les antennes de toutes les cellules participant au réseau MBSFN.

Dans l'un et l'autre de ces exemples DVB-T2, ou LTE-eMBMS/MBSFN, un réseau à fréquence unique SFN est fondamentalement susceptible de fonctionner selon différentes configurations de transmission, même si la norme LTE ne le prévoit pas pour le mode LTE-eMBMS/MBSFN qui n'a qu'une seule et unique modulation appliquée à toutes les antennes.

Or, la qualité de la réception via l'antenne d'un terminal de télévision fixe ou mobile (DVB-T2) ou d'un téléphone portable (UMTS-LTE) peut dépendre de la configuration du réseau. En effet, la configuration réseau procurant la meilleure qualité de réception n'est pas toujours la même, car celle-ci dépend du canal de transmission, c'est-à-dire de l'environnement entre le terminal et le réseau.

La présente invention vise à proposer un procédé permettant d'optimiser la transmission d'un réseau à fréquence unique SFN susceptible de fonctionner selon plusieurs configurations de transmission. Selon l'invention, le diffuseur ou l'opérateur reçoit des informations de niveau de qualité de réception selon les combinaisons possibles, ce qui lui permet le cas échéant de modifier la configuration en cours.

L'invention concerne ainsi un procédé de transmission par diffusion optimale sur un réseau du type à fréquence unique (SFN) dans lequel une pluralité d'émetteurs émettent des signaux vers des récepteurs selon une configuration d'émission, par exemple selon le protocole MIMO ou MISO et en particulier selon le protocole MISO Alamouti, parmi une pluralité de configurations d'émission, caractérisé en ce qu'il comporte l'émission d'un ou plusieurs échantillons de message test correspondant chacun à une configuration d'émission à tester qui est choisie parmi au moins certaines des configurations d'émissions possibles, chaque échantillon de test présentant un en-tête permettant d'identifier la configuration d'émission à laquelle il correspond, ainsi que la réception et le décodage par au moins certains desdits récepteurs desdits échantillons de test pour générer, pour au moins un de ces échantillons de test, au moins un paramètre représentatif de la qualité de la réception de la configuration d'émission qui leur correspond.

Selon une première variante, le procédé est caractérisé en ce que le réseau est un réseau SFN DVB-T2 permettant une pluralité de configurations d'émission du réseau résultant d'une pluralité de modulations possibles sur chaque antenne selon un protocole MIMO ou MISO (en particulier MISO Alamouti), et en ce qu'au moins une configuration à tester est appliquée à un échantillon de message test transmis dans des trames FEF (Future Extension Frame) dites trames FEF de test avec un en-tête indiquant au moins la configuration d'émission à laquelle correspond ladite trame FEF de test, et intercalées temporellement entre les trames T2. Ledit en-tête peut comporter un identifiant d'au moins un critère de qualité à utiliser dans les récepteurs.

Optionnellement, on peut utiliser les données transmises dans lesdites trames DVB-T2 ou une transmission dans un flux DVB-T2 des mêmes informations que celles qui sont contenues dans ladite trame FEF de test pour tester la configuration d'émission indiquée dans la signalisation DVB-T2, qui est utilisée pour toutes les trames DVB-T2 d'une supertrame.

Pour pratiquer lesdites mesures de performance de diverses configurations réseau MISO ou MIMO en DVB-T2, on utilise des trames FEF, c'est-à-dire des trames distinctes du flux des services transmis en DVB-T2.

Il n'est en effet pas possible de changer de configuration MISO ou MIMO entre deux trames DVB-T2 consécutives, mais (théoriquement) seulement entre deux supertrames DVB-T2 ; ceci est limitant, et par ailleurs non implémenté dans les équipements actuels. Au contraire, l'utilisation de trames FEF dédiées pour les tests permet ce changement de configuration MISO ou MIMO fréquent.

En corollaire, il ne serait pas pertinent de transmettre un entête indiquant la configuration réseau de la trame DVB-T2 puisque celle-ci ne peut théoriquement changer que d'une supertrame à l'autre.

L'utilisation de trames FEF permet d'être certain que les informations destinées aux mesures et tests (en-tête et données) seront transmises dans des trames selon une configuration réseau particulière. Au contraire, avec DVB-T2 ces données seraient mélangées aux données des services DVB-T2 et il ne serait en principe pas possible de s'assurer que les données de tests soient isolées dans une trame DVB-T2 particulière.

Par conséquent, dans le cas particulier des trames DVB-T2, il est possible de les exploiter pour faire des mesures de qualité de deux manières, non exclusives :
- sans aucune transmission de données de test : dans ce cas on connaît la configuration d'émission utilisée (connue via la signalisation DVB-T2), constante pour toutes les trames DVB-T2 d'une super-trame. Concernant les critères de qualité mis en oeuvre, seuls ceux ne nécessitant pas de connaître *a priori,* côté récepteur, les données transmises sont utilisables (en particulier cela exclut le Taux d'Erreurs Binaires).
- et/ou avec transmission dans un flux DVB-T2 des mêmes informations contenues dans des trames FEF de test. Toutefois, seule la configuration d'émission utilisée pour DVB-T2 peut être mesurée.

Optionnellement, une ou plusieurs trames DVB-T2 d'une supertrame peuvent être utilisées pour tester la configuration MISO utilisée (en principe une seule configuration MISO est mise en oeuvre pour toutes les trames DVB-T2), en complément ou en remplacement de la même configuration MISO testée dans une trames FEF. Cette approche est cependant limitée ; en effet le message transmis dans les trames DVB-T2 n'est en principe pas dédié au test d'une configuration mais est un service (par exemple vidéo) à la différence des messages test des trames FEF, ce qui peut limiter le choix des critères de performance.

Le procédé peut être caractérisé en ce que chaque récepteur qui reçoit les lesdites trames FEF (et éventuellement DVB-T2) pourvues d'un tel en-tête, élabore pour chacune des configurations à tester, et à partir du contenu des trames FEF et/ou DVB-T2, au moins une note correspondant à la qualité de réception selon au moins un critère de qualité donné, la ou lesdites notes correspondant aux configurations à tester ou une sélection de notes correspondant aux performances les plus élevées, ou bien une information indicative de la ou des configurations d'émission ayant la meilleur performance de qualité étant envoyées à une tête de réseau par chacun des récepteurs avec un en-tête d'identification indiquant au moins la configuration d'émission à laquelle correspond ladite trame FEF et des informations relatives à la localisation dudit récepteur. Eventuellement, la tête de réseau collationne les notes envoyées par les récepteurs et détermine au moins une configuration optimale d'émission pour les récepteurs situés dans au moins une zone de réception située dans la couverture d'un même groupe d'émetteurs.

De préférence, il est caractérisé en ce que la tête de réseau modifie la configuration d'émission dans au moins une dite zone de réception pour la faire correspondre à ladite configuration optimale de ladite zone de réception.

Selon une deuxième variante, le procédé est caractérisé en ce que le réseau est un réseau UMTS-LTE et en ce que chaque configuration d'émission à tester selon un protocole MIMO ou MISO (en particulier MISO Alamouti) est appliquée à un échantillon de message test transmis dans des blocs de ressource (« Resource Block »), avec un en-tête indiquant au moins la configuration d'émission à laquelle correspond ledit bloc de ressource.

Il peut être alors caractérisé en ce que chaque récepteur qui reçoit des blocs de ressource pourvus d'un tel en-tête élabore pour au moins une configuration testée, et à partir du contenu du ou desdits blocs de ressource, au moins une note correspondant à la qualité de réception selon au moins un critère de qualité donné, lesdites notes correspondant aux configurations à tester ou une sélection de notes correspondant aux performances les plus élevées, ou bien une information indicative de la ou des configurations d'émission ayant la meilleure performance de qualité étant envoyées par chacun des récepteurs avec un en-tête d'identification indiquant au moins la configuration d'émission à laquelle correspond ledit bloc de ressource et des informations relatives à la localisation dudit récepteur à l'unité de gestion de mobilité MME du réseau UMTS-LTE, ou à une entité reliée fonctionnellement à celle-ci. Eventuellement, l'unité de gestion de mobilité, après collationnement des notes envoyées par les récepteurs, détermine au moins une configuration optimale d'émission pour les récepteurs situés dans au moins une zone de réception située à la couverture d'un même groupe d'émetteurs.

De préférence, il est caractérisé en ce que l'unité de gestion de mobilité MME modifie la configuration d'émission dans au moins une dite zone de réception pour la faire correspondre à ladite configuration optimale de ladite zone de réception.

L'invention concerne également un récepteur de test pour la mise en oeuvre d'un procédé tel que décrit ci-dessus, comprenant un module de qualité pour effectuer des mesures de qualité sur des échantillons de message test reçus dont chacun correspond à une configuration d'émission à tester.

Le récepteur de test peut comprendre également un espace mémoire pour enregistrer des notes générées par ledit module de qualité et représentatives de la qualité de chaque dit échantillon de message test, ainsi qu'un comparateur pour identifier la ou les configurations d'émission ayant la meilleure performance de qualité.

Le module de qualité et le comparateur peuvent être réalisés de façon matérielle (sous la forme de circuits électroniques dédiés), logicielle (sous la forme de programmes exécutés pas un processeur de traitement de signaux) ou hybride matérielle-logicielle.

Le récepteur de test peut comprendre également un moyen de communication pour transmettre à une tête de réseau ou à une unité de gestion de mobilité :
- des notes générées par ledit module de qualité et représentatives de la qualité d'au moins les échantillons de message test ayant les meilleurs performances de qualités, ou une information indicative de la ou des configurations d'émission ayant la meilleure performance de qualité, et
- une information de localisation géographique du récepteur.

Le moyen de communication peut notamment être un émetteur WiFi ou UMTS 3G/4G, ou une interface avec un réseau filaire.

Le récepteur de test peut comprendre également un moyen (matériel, logiciel ou hybride) pour extraire lesdits messages de test de trames FEF d'un signal DVB-T2 reçu, ou de blocs de ressources d'un signal UMTS-LTE reçu.

En outre, ledit module de qualité peut être adapté pour extraire desdits messages de test des identifiants de critères de qualité, et pour mesurer les critères de qualité correspondants.

L'invention concerne également une tête de réseau d'un réseau DVB-T2, comportant un moyen de communication pour collecter des notes ou des informations indicatives de la ou des configurations d'émission ayant la meilleure performance de qualité envoyées par des récepteurs de test, et un moyen (matériel, logiciel ou hybride) pour déterminer au moins une configuration optimale d'émission pour les récepteurs situés dans au moins une zone de réception située dans la couverture d'un même groupe d'émetteurs.

La tête de réseau peut comporter également un moyen (matériel, logiciel ou hybride) pour modifier la configuration d'émission dans au moins une dite zone de réception pour la faire correspondre à ladite configuration optimale de ladite zone de réception.

L'invention concerne également une unité de gestion de mobilité d'un réseau UMTS-LTE, comportant un moyen de communication pour collecter des notes ou des informations indicatives de la ou des configurations d'émission ayant la meilleur performance de qualité envoyées par des récepteurs de test, et un moyen matériel, logiciel ou hybride) pour déterminer au moins une configuration optimale d'émission pour les récepteurs situés dans au moins une zone de réception située dans la couverture d'un même groupe d'émetteurs.

L'unité de gestion de mobilité peut comporter également un moyen (matériel, logiciel ou hybride) pour modifier la configuration d'émission dans au moins une dite zone de réception pour la faire correspondre à ladite configuration optimale de ladite zone de réception.

L'invention sera mieux comprise à la lecture de la description qui va suivre, en liaison avec les dessins annexés :
- la figure 1 illustre les 8 configurations possibles C1 à C8 dans d'un réseau SFN mettant en oeuvre le MISO DVB-T2 et composé de deux paires d'antennes (A11, A12) et (A21, A22) ;
- la figure 2 est une série de courbes de qualité représentant un exemple de taux d'erreur (bit error rate) BER (en ordonnée) en fonction du rapport signal à bruit SNR (en abscisse) du signal reçu pour les différentes configurations C1 à C8 précitées;
- la figure 3 illustre une mise en oeuvre de l'invention qui permet d'émettre successivement les différentes configurations MISO-SFN de réseau à tester dans le cas d'un réseau DVB-T2 avec deux groupes d'émetteurs ;
- la figure 4a et 4b sont une représentation d'un paquet T2-MI de la norme et de la partie FEF ("FEF part") ;
- la figure 4c illustre le champ rfu d'une trame « L1-presignaling »,
- la figure 5 est un schéma du système basé sur la réception d'une série de trames FEF (et optionnellement d'une ou plusieurs trames DVB-T2 par supertrame) de mise en oeuvre des tests de qualité de réception au niveau du terminal DVB-T2 et permettant une mise à jour de la configuration optimale mesurée ;
- la figure 6 illustre la mise en oeuvre de l'invention dans une configuration DVB-T2 pour un groupe de 3 antennes ;
- les figures 7a à 7c illustrent l'émission des blocs de ressource dans un réseau UMTS-LTE ;
- la figure 8 est un exemple de mise en oeuvre des blocs de ressource du réseau UMTS-LTE dans le cadre de la présente invention ;
- la figure 9 est un schéma du système basé sur la réception d'une série blocs de ressource de mise en oeuvre des tests de qualité de réception au niveau du terminal LTE d'un réseau UMTS-LTE et permettant une mise à jour de la configuration optimale mesurée;
- la figure 10 est un exemple de mise en oeuvre de l'invention dans le cadre d'un réseau UMTS-LTE pour un groupe de 3 antennes;
- les figures 11a et 11b illustrent les répartitions possibles des zones de couverture et de regroupement d'émetteurs dans un réseau SFN étendu, aussi bien pour DVB-T2, que pour UMTS-LTE.

Pour la norme DVB-T2, on pourra se référer aux documents suivants de l'ETSI :
- Modulator Interface (T2-MI) for a second generation digital terrestrial television broadcasting system (DVB-T2); document ETSI TS 102773 V.2.1 (décembre 2010);
- Implementation guidelines for a second generation digital terrestrial television broadcasting system (DVB-T2); document ETSI TS 102 831 V.1.1.1. (décembre 2010) ;
- Frame structure channel coding and modulation for a second generation digital terrestrial television broadcasting system (DVB-T2) ; document ETSI EN 302 755 V.1.2.1. (février 2011) ; ainsi que :
- Modulator Interface (T2-MI) for a second generation digital terrestrial television broadcasting system (DVB-T2); (DVB document A 136 r2, Juin 2009).

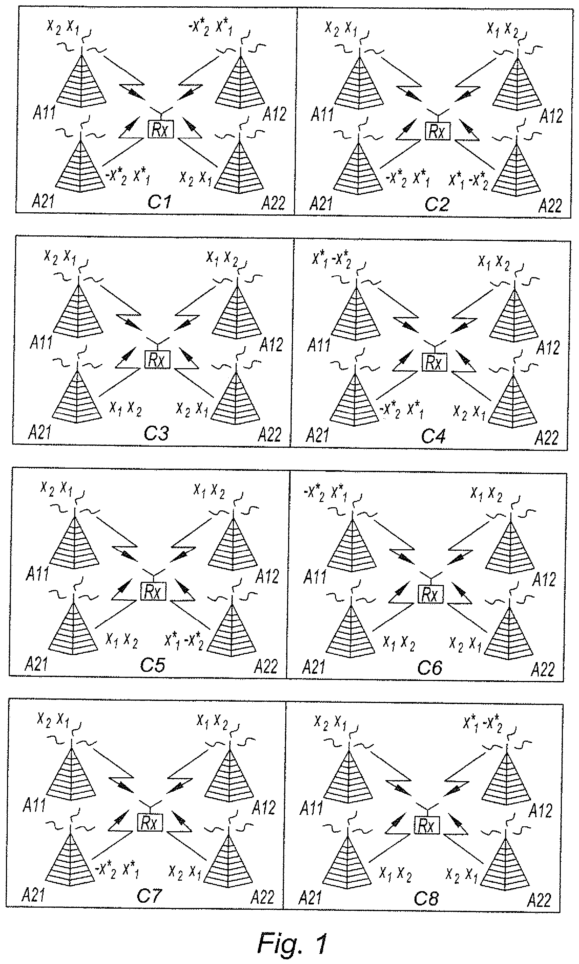

Les configurations illustrées à la figure 1 sont celles qui peuvent exister dans un réseau de diffusion constitué de 4 antennes émettrices A11, A12, A21 et A22, avec un codage MISO (Multiple Input Single Output) Alamouti (celui qui est utilisé dans DVB-T2) et qui met en oeuvre sur chaque antenne une des deux modulations possibles G1 ou G2 :
- G1 désigne le signal numérique à transmettre, et
- G2 désigne le signal G1 modifié selon le protocole MISO Alamouti défini dans le standard DVB-T2.

Cette option MISO permet de réaliser différentes combinaisons de réseaux correspondant à différents schémas de diversité dans lesquels certaines antennes émettent les mêmes symboles alors que d'autres antennes émettent des symboles modifiés (conjugués). Le tableau suivant reprend de manière synthétique les 8 configurations (notées Ci) exposées à la figure 1.

**(tableau 1)**

| | Antennes → | A11 | A12 | A21 | A22 |
|---|---|---|---|---|---|
| COMBINAISONS | C1 | G1 | G2 | G2 | G1 |
| | C2 | G1 | G2 | G1 | G2 |
| | C3 | G1 | G1 | G1 | G1 |
| | C4 | G2 | G2 | G1 | G1 |
| | C5 | G1 | G1 | G1 | G2 |
| | C6 | G2 | G1 | G1 | G1 |
| | C7 | G1 | G2 | G1 | G1 |
| | C8 | G1 | G1 | G2 | G1 |

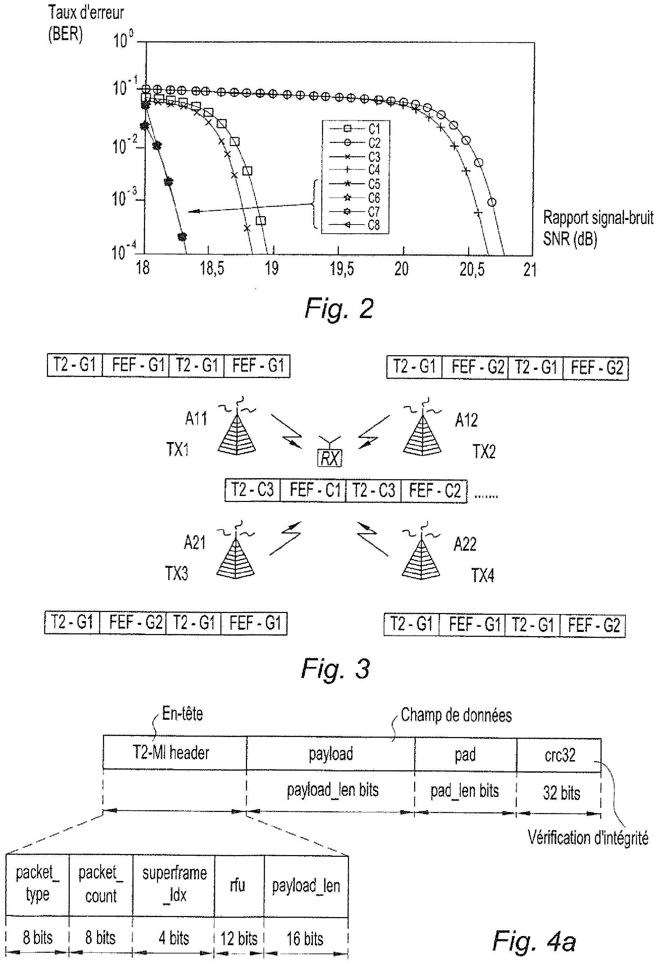

La figure 2 montre la performance des 8 configurations possibles, selon un critère de taux d'erreur (BER) en fonction du rapport signal-bruit (SNR) du signal reçu, obtenue par simulation de ce réseau de diffusion dans des conditions représentatives. On pourra se référer à la publication de M. Tormos, C. Tanougast, A. Dandache, P. Brétillon, and P. Kasser, "Performance évaluation for different MISO - SFN networks combinations for DVB-T2 standard", 2011 IEEE International symposium on broadband multimedia systems and broadcasting (BMSB'11), Nuremberg, Allemagne, 8-10 Juin 2011.

On constate aisément que pour un niveau donné du rapport signal-bruit (SNR), la qualité de réception du message est la meilleure (le taux d'erreur BER est minimal) pour les configurations C5 C6 C7 et C8.

Cela montre clairement la pertinence de l'invention. Le principe de l'invention est, pour un rapport signal-bruit (SNR) imposé par l'environnement de transmission, de tester plusieurs configurations de transmission du réseau afin de déterminer au moins une configuration de transmission optimale selon un certain critère de qualité. Cette configuration optimale peut ultérieurement être mise en oeuvre sur le réseau par une action de rétroaction (ou « feedback »).

Dans le contexte d'un réseau selon la norme DVB-T2, l'entité « DVB-T2 Gateway » achemine selon le protocole T2-MI un même flux de transport DVB/MPEG-2 vers tous les émetteurs. Chaque antenne est connectée à un émetteur, et transmet les trames T2 et éventuellement des trames FEF (vides) multiplexés, générées par l'émetteur à partir du flux T2-MI reçu de « DVB-T2 Gateway ».. « DVB-T2 Gateway » permet également de choisir la modulation G1 ou G2 MISO Alamouti appliquée à chaque antenne via le protocole T2-MI. Par exemple, dans le réseau à 4 antennes précédent, la configuration C3 (G1 est émis par les quatre antennes) peut être choisie.

Le procédé selon l'invention utilise les trames d'extension FEFs (Future Frame Extension) de DVB-T2 pour envoyer les combinaisons réseau à évaluer, choisies parmi toutes les combinaisons possibles. Une super-trame T2 peut en effet être composée d'une succession de trames T2 et de trames FEF (dont le contenu n'est pas défini par la norme).

Afin de tester toutes les configurations voulues, un contenu (message) quelconque est inséré dans au moins une trame FEF et modulé selon une des configurations réseau à tester.

Ceci est illustré par la figure 3 pour une configuration réseau C3 des trames T2 (G1 est émis par les quatre antennes), et les configurations C1 puis C2 pour les trames de test. Quatre émetteurs pilotés par au moins une DVB-T2 Gateway sont mis en oeuvre.

L'émetteur TX1 envoie dans l'antenne A11 des trames T2 et des trames FEF qui dans l'exemple de cette figure sont successivement T2-G1, FEF-G1, T2-G1, FEF-G1, etc..., cette notation signifiant que les trames T2 FEF utilisent la modulation G1 (non modifié) selon le protocole MISO Alamouti sur leurs contenus (messages) respectifs.

L'émetteur TX2 envoie dans l'antenne A12 les trames T2-G1, FEF-G2, T2-G1, FEF-G2, la notation FEF-G2 signifiant que la trame FEF utilise la modulation G2 selon le protocole MISO Alamouti sur le même contenu (message) que les FEFs de TX1.

L'émetteur TX3 envoie dans l'antenne A21 les trames T2-G1, FEF-G2, T2-G1, FEF-G1, etc...

L'émetteur TX4 envoie dans l'antenne A22 des trames T2-G1, FEF-G1, T2-G1, FEF-G2, etc...

Cet exemple correspond pour les trames T2 toujours à la configuration TX1/TX2/TX3/TX4 = G1/G1/G1/G1 c'est-à-dire C3. Pour les trames de test on a appliqué les configurations TX1/TX2/TX3/TX4 = G1/G2/G2/G1 puis G1/G2/G1/G2, c'est-à-dire C1 puis C2.

Bien entendu, n'importe laquelle des autres configurations Cj peut être utilisée aussi bien pour les trames T2 que pour les trames FEF de test, j étant un nombre entier compris entre 1 et 8.

Ainsi, on peut balayer l'ensemble des combinaisons possible C1 à C8 avec une alternance de 8 trames T2 qui émettent le contenu du programme selon la configuration actuelle, et de 8 trames FEF dont chacune contient un même contenu initial quelconque bien que apte à permettre la mesure de qualité voulue, mais qui sont émises selon les configurations possibles C1 à C8. Le contenu des trames FEF peut être notamment une séquence connue ou une séquence pseudo-aléatoire.

Le contenu (message) des trames T2 varie d'une trame à la suivante, puisqu'il s'agit du programme qui est diffusé, alors que le contenu (message) des trames de test FEF peut être le même pour toutes les trames FEF, avant modulation selon une des deux modulations G1 ou G2 par exemple selon le protocole MISO-Alamouti.

La séquence complète pour l'émission dans les trames FEF successives des configurations C1 à C8 du tableau 1 est ainsi :
Pour l'antenne A11 :
   T2-G1, FEF-G1, T2-G1, FEF-G1, T2-G1, FEF-G1, T2-G1, FEF-G2, T2-G1, FEF-G1, T2-G1, FEF-G2, T2-G1, FEF-G1, T2-G1, FEF-G1
Pour l'antenne A12 :
   T2-G1, FEF-G2, T2-G1, FEF-G2, T2-G1, FEF-G1, T2-G1, FEF-G2, T2-G1, FEF-G1, T2-G1, FEF-G1, T2-G1, FEF-G2, T2-G1, FEF-G1
Pour l'antenne A21 :
   T2-G1, FEF-G2, T2-G1, FEF-G1, T2-G1, FEF-G1, T2-G1, FEF-G1,- T2-G1, FEF-G1, T2-G1, FEF-G1, T2-G1, FEF-G1, T2-G1, FEF-G2
Pour l'antenne A22 :
   T2-G1, FEF-G1, T2-G1, FEF-G2, T2-G1, FEF-G1, T2-G1, FEF-G1,- T2-G1, FEF-G2, T2-G1, FEF-G1, T2-G1, FEF-G1, T2-G1, FEF-G1.

Cette séquence peut être répétée périodiquement, autant que nécessaire pour obtenir une estimation de la meilleure configuration, à la fois suffisamment fiable et suffisamment réactive aux changements de l'environnement de transmission (ex : terminal mobile).

La mise en oeuvre de ce procédé nécessite une série d'ajouts à la norme DVB-T2 d'une part, et au protocole T2-MI d'autre part.

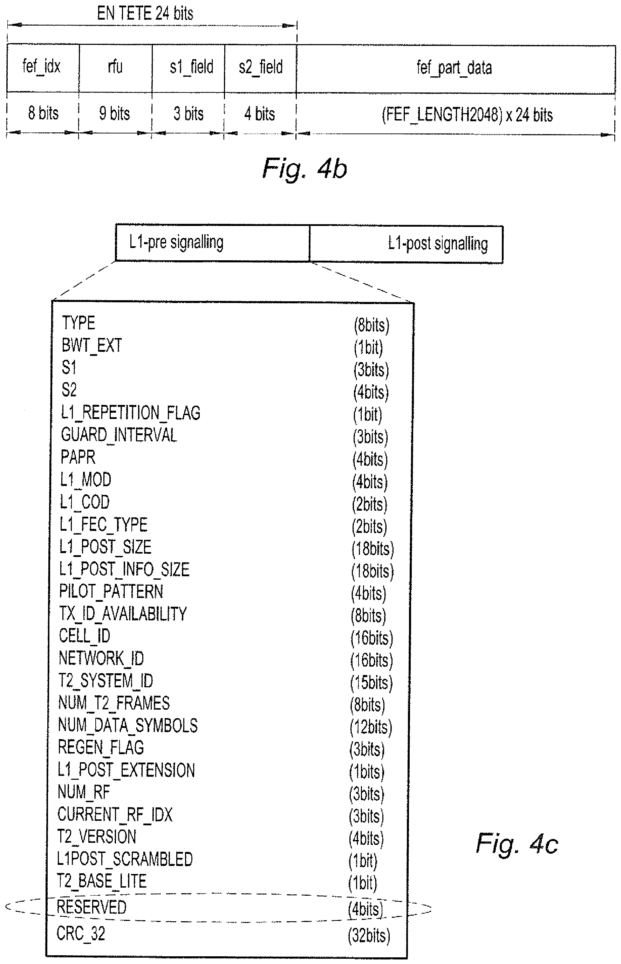

L'entité « DVB-T2 gateway » génère des paquets T2-MI, dont l'architecture est représentée sur la figure 4a, qui transportent des contenus destinés aux trames T2.
1) Selon l'invention elle doit également transporter des contenus destinés aux trames FIEF de test. Cette dernière fonctionnalité n'étant pas prévue dans la norme, on s'appuie ici sur une modification du champ désignant le type de paquet ("packet-type") sur 8 bits dans l'en-tête des paquets T2-MI (T2-MI header), afin de créer un nouveau type de paquet « FEF de test ». Ainsi les 7^{ème} et 8^{ème} bits sont disponibles et utilisés pour signaler l'existence d'une trame FEF dans le paquet T2-MI au lieu d'une trame T2 (par exemple en utilisant la valeur décimale 128 correspondant à 80 en hexadécimal).
2) De plus, les 12 bits inutilisés du champ rfu peuvent être utilisés pour identifier l'index j de la configuration Cj testée et le nombre de configurations possibles. Les autres champs sont inchangés.
3) Par ailleurs, un identifiant indiquant le(s) critère(s) de qualité à utiliser dans les récepteurs peut être présent dans le contenu (message) des paquets FEF de test ; les 16 premiers bits du contenu du paquet sont réservés à cet effet, chaque bit correspondant à un critère (les récepteurs connaissent à l'avance la correspondance entre chaque bit et les critères disponibles).
4) Enfin, la DVB-T2 Gateway intègre une table du type du tableau 1 ci-dessus pour l'ensemble des antennes du réseau, ou pour un sous-groupe d'antennes, et permet sous le contrôle de la tête de réseau (T) d'indiquer à chaque antenne selon quelle configuration MISO (A ou B) ou MIMO elle doit fonctionner. On utilise à cet effet les paquets T2-MI « auxiliary streams » pour transmettre ces informations à chaque émetteur/antenne, en même temps qu'un identifiant d'émetteur comme décrit dans le document ETSI TS 102 992 V1.1.1 (décembre 2010).

L'entité « émetteur » génère des trames T2 et des trames FEF de test envoyées à l'antenne. La norme DVB-T2 signale la présence d'une trame FEF dans les symboles P1 et P2 situés en tête de la trame T2 (voir document ETSI TR 102 831 V.1.1. précité au paragraphe 6.1.7.2. et 6.1.7.3. FEF Signalling pages 49 et 50).
1) En revanche, il est nécessaire de créer un nouveau type de trame « FEF de test », au moyen du champ S1 du symbole P1 : les valeurs 101 et 110 sont ici utilisées pour signaler une trame FEF de test. La valeur 101 par exemple est utilisée pour signaler une trame de test en MISO, tandis que la valeur 110 par exemple est utilisée pour signaler une future trame "FEF de test" en MIMO en cas d'évolution de la norme DVB-T2 vers un mode MIMO respectivement.
2) Enfin, dans les symboles P2 le champ rfu de la trame L1-pre (figure 4c : champ RESERVED de 4 bits) peut être utilisé soit pour identifier l'index j de la configuration Cj testée et le nombre de configurations possibles, soit pour indiquer que ces informations sont dans le contenu (message) de trame FEF. Ces dernières informations sont issues des trames T2-MI « FEF de test ». Les autres champs des en-têtes sont inchangées.
3) En ce qui concerne le contenu restant (message) des paquets, il est repris intégralement du contenu des paquets T2-MI de type FEF de test, y compris l'identifiant du ou des critères de qualité à utiliser dans les récepteurs.

A la réception, l'antenne du téléviseur reçoit un seul signal qui combine les émissions des quatre émetteurs A11 à A22 dans le champ de réception où il se situe.

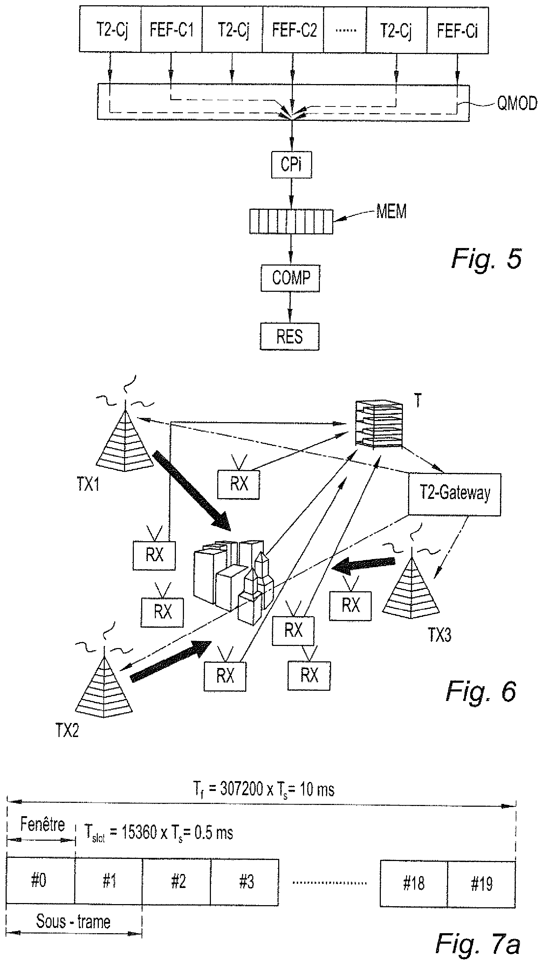

Comme illustré à la figure 5, le récepteur effectue localement des mesures de qualité sur le contenu des trames FEF de test (FEF-Cx) et/ou DVB-T2 (T2-Cx). Il existe plusieurs critères classiques dans le domaine de la transmission numérique, par exemple le taux d'erreurs binaires. Une référence particulière dans le domaine de la diffusion DVB est par exemple le standard ETSI ETR 101 290 V1-2.1 "Measurement Guidelines for DVB Systems" (Mai 2005).

Les trames reçues correspondent aux configurations d'émission. Elles sont notées pour l'exemple ci-dessus dans lequel les configurations C1 à C8 sont émises successivement dans les trames FEF, et la configuration C3 pour les trames T2: T2-C3, FEF-C1, T2-C3, FEF-C2, T2-C3, FEF-C3, T2-C3, FEF-C4, T2-C3, FEF-C5, T2-C3, FEF-C6, T2-C3, FEF-C7, T2-C3, FEF-C8.

T2-C3 signifie que la trame reçue a été émise selon la configuration C3.

(FEF-Cj pour x = 1 ..... 8) signifie que la trame FEF reçue a été émise selon la configuration Cx.

Il est bien entendu possible de ne tester que certaines (au moins une) des configurations possibles, auquel cas la séquence émise est simplifiée.

Le récepteur Rx utilise le contenu du champ rfu de l'en-tête L1-pre de la trame FEF de test transmis dans les symboles P2 pour identifier à quelle configuration réseau elle correspond, et le contenu de la trame FEF de test indiquant éventuellement le(s) critère(s) de qualité à utiliser.

Les trames FEF de test reçues FEF-C1 à FEF-C8 font l'objet d'une mesure de qualité selon un critère de qualité ; par exemple le taux de bits erronés BER sur l'ensemble de la trame FEF de test (le contenu de la trame est dans ce cas connu à l'avance par le récepteur, tel un PRBS - Peudo Random Binary Sequence), ou le MER (Modulation Error Ratio), le nombre d'itérations de décodage LDPC.

Pour chaque combinaison C1 à C8, le récepteur constate des niveaux de qualité différents selon le critère de qualité choisi.

A cet effet, le module de qualité QMOD reçoit les trames FEF-C1 .... FEF-C8 et effectue des mesures de qualité sur chacune d'entre elles ou sur certaines seulement de celles-ci;
Le module QMOD peut également recevoir les trames T2-Cj correspondant à la configuration en cours Cj.

Le module QMOD produit ensuite des notes CPi représentatives de la qualité perçue par le récepteur, i variant de 1 à 8 pour l'exemple précité.

Ces valeurs sont mémorisées dans un espace mémoire MEM et comparées dans un comparateur COMP, pour donner un résultat RES identifiant la (ou les) configuration(s) ayant la meilleure performance de qualité.

Le récepteur détermine également une information de localisation géographique selon une méthode quelconque (récepteur GPS; ou identifiant des émetteurs TX environnants, ...)

Les émetteurs TX1, TX2, TX3, etc... du réseau émettent les trames (T2, FEF) selon le schéma de configuration défini ci-dessus. Ceci est figuré par les flèches en gras à la figure 6.

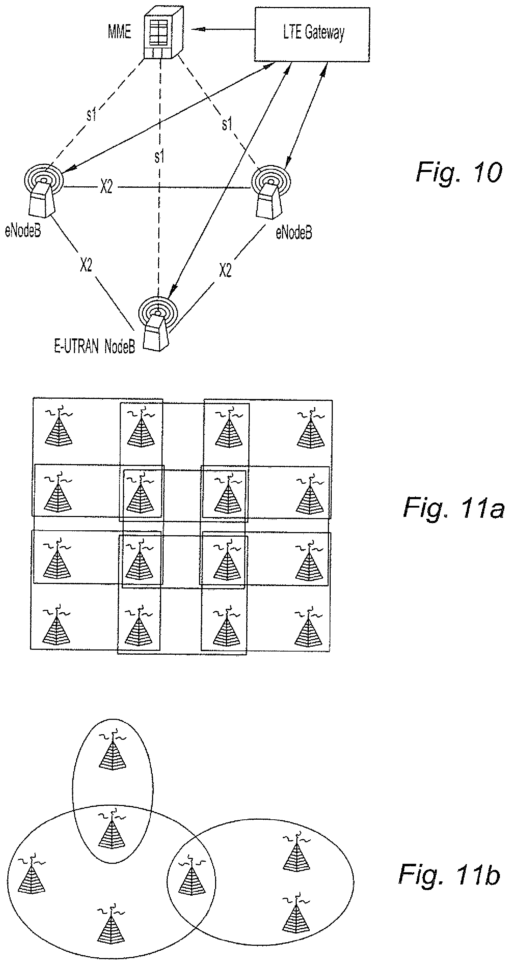

Les récepteurs RX reçoivent les signaux et déterminent le ou les meilleures configurations selon la procédure indiquée ci-dessus. La tête du réseau T reçoit de chaque récepteur (par exemple via un réseau d'accès filaire tel que l'ADSL ou sans fil tel que le WiFi ou l'UMTS 3G/4G) la meilleure configuration estimée ainsi que son information de localisation géographique, et détermine la meilleure configuration pour l'ensemble du réseau ou pour un sous-groupe d'antennes (selon l'étendue géographique du réseau : figure 11a 11b) selon un procédé quelconque comme par exemple un vote à la majorité par les récepteurs (configuration la plus souvent sélectionnée), et paramètre la "Gateway T2" pour modifier la configuration en cours. En variante ou en complément, les notes attribuées aux différentes configurations ou seulement à la ou aux configurations présentant les meilleures performances de qualité peuvent être transmises à la tête de réseau. Si toutes les notes sont transmises, le comparateur peut être intégré à la tête de réseau et pas aux récepteurs.

Pour le standard UMTS-LTE, on pourra se référer à la Note d'application "UMTS Long Term Evolution (LTE) Technology Introduction - Application Note 1MA111" de ROHDE & SCHWARZ (Mars 2007).

L'évolution UMTS-LTE a été introduite dans la version 8 ("release 8") des normes 3GPP. LTE met en oeuvre une technique d'accès multiple à division orthogonale en fréquence OFDMA ("Orthogonal Frequency Division Multiple Access") pour la liaison descendante, et d'un accès multiple à porteuse unique et à division de fréquence SC-DFMA ("Single carrier-Frequency Division Multiple Access") pour la liaison ascendante.

De plus, des réseaux d'antennes à entrées et à sorties multiples MIMO forment une partie essentielle de l'évolution LTE.

Pour simplifier l'architecture des protocoles, LTE apporte des changements importants aux protocoles UMTS actuels. E-UTRA comporte deux types de trames, à savoir le type 1 pour le mode duplex à division de fréquence FDD ("Frequency Division Duplex"), et le type 2 pour le mode duplex à division temporelle TDD ("Time Division Duplex").

C'est la structure de trame de type 1 qui est utilisée préférentiellement dans le cadre de la présente invention. La structure de trame de type 1 (radio frame), de longueur Tf = 10 ms est divisée (voir figure 7a) en 20 fenêtres ("slots") de même durée Tslot (0,5 ms). Toutefois, le procédé selon l'invention s'applique de manière identique à une structure de trame de type 2.

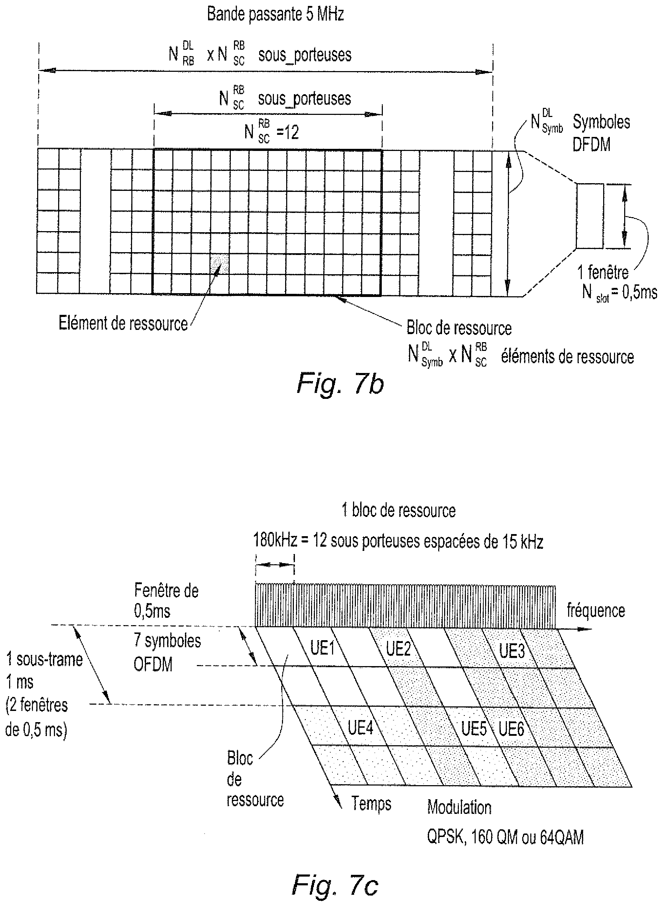

Une sous-trame (sub-frame) est composée de 2 fenêtres consécutives et dure donc 1 ms, la trame comportant ainsi 10 sous-trames. Dans le domaine fréquentiel, la bande passante de la liaison descendante est découpée de manière régulière en blocs de 180 kHz. Un bloc de ressource (ressource block) a une durée de 1 slot (0,5 ms) et une bande passante de 180 kHz (Figures 7b et 7c).

Le nombre de blocs de ressource utilisés dans une trame détermine la bande passante disponible. La décision d'allocation de blocs de ressource aux utilisateurs peut être modifiée pour chaque intervalle de temps correspondant à une sous-trame (1 ms), c'est-à-dire toutes les deux fenêtres de durée Tslot = 0,5 ms. La figure 7c montre un exemple d'allocation de la ressource des données utilisateur dans la liaison descendante à des flux ou utilisateurs distincts UE1 ... UE6 au nombre de six.

LTE offre la possibilité d'utiliser le protocole MIMO mais le mode LTE-eMBMS/MBSFN ne le permet pas à ce jour. En MBSFN une seule et unique modulation est donc appliquée à toutes les antennes de toutes les cellules participant au réseau de diffusion MBSFN à fréquence unique.

Cependant, une diversité MISO ou MIMO dans un mode distribué (dans lequel les différentes antennes intervenant dans le réseau sont chacune sur un site géographiquement différent) est techniquement possible dans un réseau MBSFN, selon un principe identique au DVB-T2.

Pour mettre en oeuvre l'invention dans un réseau LTE eMBMS/MBSFN, les différentes combinaisons possibles sont transmises sur des blocs de ressource (en lieu et place des trames T2 et des trames FEF pour la télévision DVB-T2). C'est l'unité de gestion de mobilité MME ("Mobility Management Entity") qui est le point de commande du réseau et peut être utilisé pour configurer le réseau, comme l'entité « DVB-T2 gateway ».

Chaque récepteur est alors à même de détecter et de mesurer la qualité de réception à partir de ces signaux de test contenus dans les blocs de ressource LTE.

Comme dans le cas du protocole DVB-T2, un identifiant indiquant le(s) critère(s) de qualité à utiliser dans les récepteurs peut être présent dans le contenu (message) des blocs de ressource LTE.

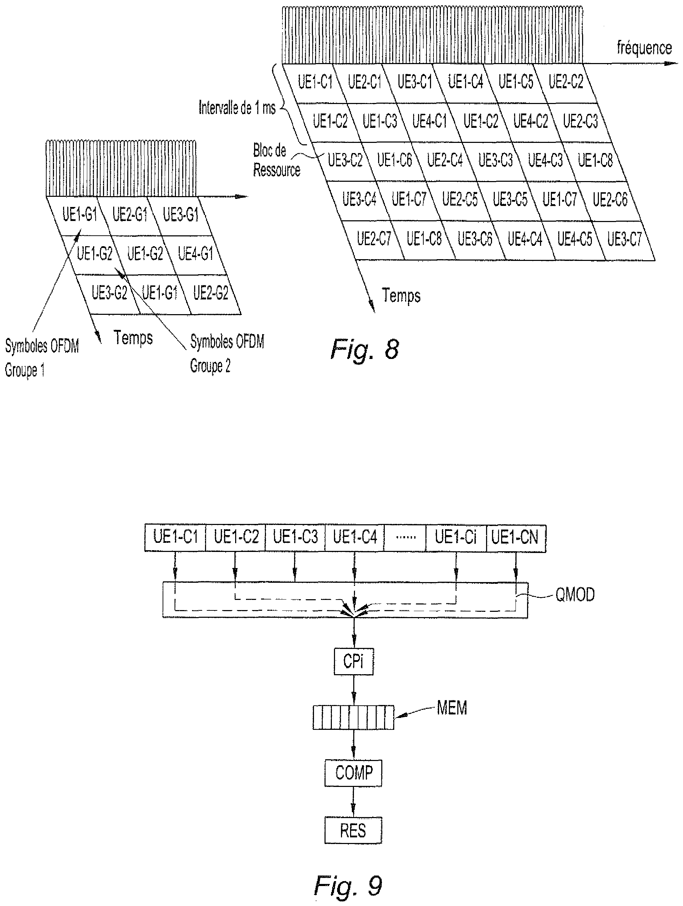

La figure 8 illustre un schéma d'émission dans lequel chacun des quatre utilisateurs UE1 à UE 4 reçoit des communications selon une configuration actuelle, alors que les éléments de ressource d'un ou plusieurs blocs de ressource sont affectés à des données de test.

Ces données de test représentent les différentes configurations possibles, par exemple C1 à C8 pour un groupe de quatre émetteurs fonctionnant en MISO Alamouti (2 modulations G1 et G2 possibles), dans le champ duquel l'utilisateur du téléphone est susceptible de se trouver.

La technique mise en oeuvre est similaire à celle qui est utilisée dans le cas du DVB-T2. Chaque émetteur émet des symboles OFDM de groupe 1 (G1) correspondant au signal non modifié, ou de groupe 2 (G2) correspondant au signal modifié selon le procédé MISO-Alamouti, en fonction de la configuration d'émission des émetteurs.

La figure 9 est un organigramme de détermination des notes de qualité de réception qui est semblable à celui de la figure 5, à ceci près que l'utilisateur UE1 extrait des signaux reçus les données de test UE1-C1, UE1-C2, UE1-C3 .... correspondant aux différentes configurations à tester, qui peuvent être toutes les combinaisons existantes, ou bien seulement certaines d'entre-elles.

Le récepteur détermine également une information de localisation géographique selon une méthode quelconque (récepteur GPS, ou identifiant des émetteurs TX environnants, ...).

Les récepteurs RX reçoivent les signaux et déterminent le ou les meilleures configurations selon la procédure indiquée ci-dessus. La tête du réseau T reçoit de chaque récepteur (par exemple via la voie montante d'un réseau d'accès sans fil tel que le WiFi ou l'UMTS 3G/4G) la meilleure configuration estimée ainsi que son information de localisation géographique, et détermine la meilleure configuration pour l'ensemble du réseau ou pour un sous-groupe d'antennes (selon l'étendue géographique du réseau : figure 11a, 11b) selon un procédé quelconque comme par exemple un vote à la majorité par les récepteurs (configuration la plus souvent sélectionnée), et paramètre le MME pour modifier la configuration en cours. En variante ou en complément, les notes attribuées aux différentes configurations ou seulement à la ou aux configurations présentant les meilleures performances de qualité peuvent être transmises au MME. Si toutes les notes sont transmises, le comparateur peut être intégré au MME et pas aux récepteurs.

Enfin, le MME intègre une table du type tableau 1 pour l'ensemble des antennes du réseau ou chaque sous-groupe d'antennes.

Le MME_commande alors aux transmetteurs de transmettre selon G1 ou G2 (figure 10). Alternativement, cette fonction peut être assurée ou par une unité qui lui est liée de sorte que la communication entre le noeud eNB ("E-UTRAN Node B") et l'entité MME puissent être effectuées comme défini par le protocole LTE grâce à l'interface S1 et avec l'interface X2 entre tous les noeuds eNB.

La figure 11a et 11b illustrent (et ceci s'applique aussi bien à DVB-12, qu'à LTE) deux configurations de réseau.

Dans la configuration de la figure 11a, les utilisateurs se trouvent tous dans la zone de couverture (représentée par un carré) d'un même nombre d'émetteurs, ici 4.

Dans la configuration de la figure 11b, les zones de couverture (ici figurées par des ellipses) comprennent un nombre variable d'émetteurs, ici compris entre 2 et 4.

Par conséquence, la tête de réseau T (DVB-T2) ou l'entité MME (LTE) doit connaître les zones de couverture pour pouvoir effectuer les calculs d'optimisation, et dans les informations de mesure de qualité envoyées par les récepteurs, il doit pouvoir identifier dans quelles zone de couverture le récepteur se trouve.

## Revendications

1. Procédé de transmission par diffusion optimale sur un réseau du type à fréquence unique (SFN) dans lequel une pluralité d'émetteurs (TX1, TX2, TX3, TX4) émettent des signaux vers des récepteurs (RX) selon une configuration d'émission, parmi une pluralité de configurations d'émission (C1-C8), ledit procédé étant **caractérisé en ce qu'**il comporte :
- l'émission d'un ou plusieurs échantillons de message test (FEJ-Cj) dont chacun correspond à une configuration à tester (Cj) choisie parmi au moins certaines des configurations d'émissions possibles, chaque échantillon de message test présentant un en-tête permettant d'identifier la configuration d'émission à laquelle il correspond,
- la réception et le décodage par au moins certains desdits récepteurs desdits échantillons de test pour générer, pour au moins un de ces échantillons de test, au moins un paramètre représentatif de la qualité de la réception de la configuration d'émission qui leur correspond.

2. Procédé selon la revendication 1, **caractérisé en ce que** le réseau est un réseau SFN DVB-T2 permettant une pluralité de configurations d'émission du réseau résultant d'une pluralité de configurations du réseau résultant d'une pluralité d'émissions possibles sur chaque antenne selon un protocole MIMO ou MISO, notamment un protocole MISO Alamouti, et **en ce qu'**au moins une configuration à tester est appliquée à un échantillon de message test transmis dans les trames FEF dites trames FEF de test et intercalé temporellement entre les trames DVB-T2 avec un en-tête indiquant au moins la configuration d'émission à laquelle correspond ladite trame FEF de test et/ou DVB-T2.

3. Procédé selon la revendication 2, **caractérisé en ce que** ladite en-tête comporte un identifiant d'au moins un critère de qualité à utiliser dans les récepteurs.

4. Procédé selon la revendication 2 ou 3, **caractérisé en ce que** les données transmises dans lesdites trames DVB-T2 ou une transmission dans un flux DVB-T2 des mêmes informations que celles qui sont contenues dans ladite trame FEF de test sont utilisées pour tester la configuration d'émission, indiquée dans la signalisation DVB-T2, qui est utilisée pour toutes les trames DVB-T2 d'une super-trame.

5. Procédé selon une des revendications 2 à 4, **caractérisé en ce que** chaque récepteur qui reçoit les trames FEF, et/ou DVB-T2, pourvues d'un tel en-tête, élabore pour chacune des configurations à tester et à partir du contenu desdites trames FEF et/ou DVB/T2, au moins une note correspondant à la qualité de réception selon au moins un critère de qualité donné, la ou lesdites notes correspondant aux configurations à tester ou une sélection de notes correspondant aux performances les plus élevées, ou bien une information indicative de la ou des configurations d'émission ayant la meilleure performance de qualité, étant envoyées à une tête de réseau (T) par chacun des récepteurs avec un en-tête d'identification donnant au moins la configuration d'émission à laquelle correspond ladite trame FEF et/ou DVB-T2 et des informations relatives à la localisation dudit récepteur.

6. Procédé selon la revendication 5, **caractérisé en ce que** ladite tête de réseau (T) collationne les notes envoyées par les récepteurs et détermine au moins une configuration optimale d'émission pour les récepteurs situés dans au moins une zone de réception située dans la couverture d'un même groupe d'émetteurs.

7. Procédé selon la revendication 5 ou 6, **caractérisé en ce que** la tête de réseau (T) modifie la configuration d'émission dans au moins une dite zone de réception pour la faire correspondre à ladite configuration optimale de ladite zone de réception.

8. Procédé selon la revendication 1, **caractérisé en ce que** le réseau est un réseau UMTS-LTE et **en ce qu'**au moins une configuration d'émission à tester selon un protocole MIMO ou MISO, en particulier MISO Alamouti, est appliquée à un échantillon de message test transmis dans des blocs de ressource, avec un en-tête indiquant au moins la configuration d'émission à laquelle correspond ledit bloc de ressource.

9. Procédé selon la revendication 8, **caractérisé en ce que** chaque récepteur qui reçoit des blocs de ressource pourvus d'un tel en-tête élabore pour au moins une des configurations à tester, et à partir du contenu du ou desdits blocs de ressource, au moins une note correspondant à la qualité de réception selon au moins un critère de qualité donné, lesdites notes correspondant aux configurations à tester ou une sélection de notes correspondant aux performances les plus élevées, ou bien une information indicative de la ou des configurations d'émission ayant la meilleure performance de qualité étant envoyées par chacun des récepteurs avec un en-tête d'identification donnant au moins la configuration d'émission à laquelle correspond ledit bloc de ressource et des informations relatives à la localisation dudit récepteur, à une unité de gestion de mobilité (MME) du réseau UMTS-LTE, ou à une entité reliée fonctionnellement à celle-ci.

10. Procédé selon la revendication 8 ou 9, **caractérisé en ce que** l'unité de gestion de mobilité (MME), après collationnement des notes envoyées par les récepteurs, détermine au moins une configuration optimale d'émission pour les récepteurs situés dans au moins une zone de réception située à la couverture d'un même groupe d'émetteurs.

11. Procédé selon la revendication 10, **caractérisé en ce que** l'unité de gestion de mobilité (MME) modifie la configuration d'émission dans au moins une dite zone de réception pour la faire correspondre à ladite configuration optimale dans ladite zone de réception.

12. Récepteur de test destiné à un réseau du type à fréquence unique (SFN) dans lequel une pluralité d'émetteurs (TX1, TX2, TX3, TX4) émettent des signaux selon une configuration d'émission, parmi une pluralité de configurations d'émission (C1-C8) ledit récepteur de test étant **caractérisé en ce qu'**il est adapté à recevoir et à décoder un ou plusieurs échantillons de message test émis par ladite pluralité d'émetteurs, chacun desdits un ou plusieurs échantillons de message test correspondant à une configuration à tester choisie parmi au moins certaines configurations d'émissions possibles, chaque échantillon de message présentant un en-tête permettant d'identifier la configuration d'émission à laquelle il correspond, ledit récepteur étant adapté pour générer, pour au moins un de ces échantillons de test, au moins un paramètre représentatif de la qualité de la réception de la configuration d'émission qui leur correspond.

13. Récepteur de test selon la revendication 12, **caractérisé en ce qu'**il comprend un module de qualité (QMOD) pour effectuer des mesures de qualité sur des échantillons de message test reçus dont chacun correspond à une configuration d'émission à tester.

14. Récepteur de test selon la revendication 13, comprenant également un espace mémoire (MEM) pour enregistrer des notes générées par ledit module de qualité et représentatives de la qualité de chaque dit échantillon de message test, ainsi qu'un comparateur (COMP) pour identifier la ou les configurations d'émission ayant la meilleure performance de qualité.

15. Récepteur de test selon l'une des revendications 12 à 14, comprenant également un moyen de communication pour transmettre à une tête de réseau (T) ou à une unité de gestion de mobilité (MME) :
- des notes générées par ledit module de qualité et représentatives de la qualité d'au moins les échantillons de message test ayant les meilleures performances de qualité, ou une information indicative de la ou des configurations d'émission ayant la meilleure performance de qualité, et
- une information de localisation géographique du récepteur.

16. Récepteur de test selon l'une des revendications 12 à 15, comprenant des moyens pour extraire lesdits messages de test de trames FEF d'un signal DVB-T2 reçu ou un moyen pour extraire lesdits messages de test de blocs de ressources d'un signal UMTS-LTE reçu.

17. Récepteur de test selon l'une des revendications 12 à 16, dans lequel ledit module de qualité est adapté pour extraire desdits messages de test des identifiants de critères de qualité, et pour mesurer les critères de qualité correspondants.

18. Système comprenant une tête de réseau (T) d'un réseau DVB-T2, du type à fréquence unique (SFN), **caractérisé en ce que** ledit réseau comprend des récepteurs de test (RX) selon l'une quelconque des revendication 15 à 17, et **en ce que** ledit système comporte des moyens d'émettre (TX1, TX2, TX3, TX4) un ou plusieurs échantillons de message test (FEJ-Cj) dont chacun correspond à une configuration à tester choisie parmi au moins certaines des configurations d'émissions possibles (C1-C8), chaque échantillon de message test présentant un en-tête permettant d'identifier la configuration d'émission à laquelle il correspond, ladite tête de réseau comprenant:
- un moyen de communication pour collecter des notes ou des informations indicatives de la ou des configurations d'émission ayant la meilleure performance de qualité envoyées par les récepteurs de test, et
- un moyen pour déterminer au moins une configuration optimale d'émission pour les récepteurs situés dans au moins une zone de réception située dans la couverture d'un même groupe d'émetteurs.

19. Système selon la revendication 18, **caractérisé en ce que** la tête de réseau (T) comporte également un moyen pour modifier la configuration d'émission dans au moins une dite zone de réception pour la faire correspondre à ladite configuration optimale de ladite zone de réception.

20. Système comprenant une unité de gestion de mobilité (MME) d'un réseau UMTS-LTE du type à fréquence unique (MBSFN), **caractérisé en ce que** ledit réseau comprend des récepteurs de test (RX) selon l'une quelconque des revendication 15 à 17 et **en ce que** ledit système comporte des moyens d'émettre (TX1, TX2, TX3, TX4) un ou plusieurs échantillons de message test (FEJ-Cj) dont chacun correspond à une configuration à tester choisie parmi au moins certaines des configurations d'émissions possibles (C1-C8), chaque échantillon de message test présentant un en-tête permettant d'identifier la configuration d'émission à laquelle il correspond, ladite unité de gestion de mobilité comprenant:
- un moyen de communication pour collecter des notes ou des informations indicatives de la ou des configurations d'émission ayant la meilleure performance de qualité envoyées par les récepteurs de test, et
- un moyen pour déterminer au moins une configuration optimale d'émission pour les récepteurs situés dans au moins une zone de réception située dans la couverture d'un même groupe d'émetteurs.

21. Système selon la revendication 20, **caractérisé en ce que** l'unité de gestion de mobilité (MME) comporte également un moyen pour modifier la configuration d'émission dans au moins une dite zone de réception pour la faire correspondre à ladite configuration optimale de ladite zone de réception.

## Patentansprüche

1. Verfahren zum Übertragen durch optimale Verbreitung über ein Netz vom Typ mit Einzelfrequenz (SFN), in welchem eine Vielzahl von Sendern (TX1, TX2, TX3, TX4) Signale an Empfänger (RX) gemäß einer Sendekonfiguration aus einer Vielzahl von Sendekonfigurationen (C1-C8) senden, wobei das Verfahren **dadurch gekennzeichnet ist, dass** es aufweist:
- das Senden von einer oder mehreren Testnachrichtenproben (FEJ-Cj), von denen jede einer zu testenden Konfiguration (Cj) entspricht, die aus mindestens einigen der möglichen Sendekonfigurationen ausgewählt ist, wobei jede Testnachrichtenprobe einen Kopf aufweist, der erlaubt, die Sendekonfiguration zu identifizieren, der sie entspricht,
- das Empfangen und das Dekodieren durch mindestens einige der Empfänger der Testproben, um für mindestens eine dieser Testproben mindestens einen für die Qualität des Empfangs der Sendekonfiguration, die ihnen entspricht, repräsentativen Parameter zu erzeugen.

2. Verfahren nach Anspruch 1, **dadurch gekennzeichnet, dass** das Netz ein SFN DVB-T2-Netz ist, das im Ergebnis einer Vielzahl von Konfigurationen des Netzes im Ergebnis einer Vielzahl möglicher Sendungen über jede Antenne gemäß einem MIMO- oder MISO-Protokoll, insbesondere einem MISO Alamouti-Protokoll, eine Vielzahl von Sendekonfigurationen des Netzes erlaubt, und dass mindestens eine zu testende Konfiguration auf eine in den als FEF-Testraster bezeichneten FEF-Rastern übertragenes und temporär zwischen die DVB-T2-Raster mit einem Kopf, der mindestens die Sendekonfiguration angibt, welcher das FEF-Test- und/oder DVB-T2-Raster entspricht, zwischengestelltes Testnachrichtenprobe angewendet wird.

3. Verfahren nach Anspruch 2, **dadurch gekennzeichnet, dass** der Kopf eine Kennung von mindestens einem in den Empfängern zu verwendenden Qualitätskriterium aufweist.

4. Verfahren nach Anspruch 2 oder 3, **dadurch gekennzeichnet, dass** die in den DVB-T2-Rastern übertragenen Daten oder eine Übertragung in einem DVB-T2-Stream derselben Informationen wie die, die in dem FEF-Testraster enthalten sind, verwendet werden, um die in der DVB-T2-Signalisation angegebene Sendekonfiguration zu testen, die für alle DVB-T2-Raster eines Superrasters verwendet wird.

5. Verfahren nach einem der Ansprüche 2 bis 4, **dadurch gekennzeichnet, dass** jeder Empfänger, der die FEF- und/oder DVB-T2-Raster empfängt, die mit einem derartigen Kopf ausgestattet sind, für jede der zu testenden Konfigurationen und ausgehend vom Inhalt der FEF- und/oder DVB/T2-Raster mindestens eine Note erstellt, die der Empfangsqualität gemäß mindestens einem gegebenen Qualitätskriterium entspricht, wobei die Note(n) den zu testenden Konfigurationen entspricht/entsprechen, oder eine Auswahl von Noten, die den höchsten Leistungen entsprechen, oder eine Information über die oder Sendekonfigurationen mit der besten Qualitätsleistung, gesendet an eine Kopfstelle (T) von jedem der Empfänger mit einem Identkopf, der mindestens die Sendekonfiguration angibt, der das FEF und/oder DVB-T2-Raster entspricht, und Informationen über die Lokalisierung des Empfängers.

6. Verfahren nach Anspruch 5, **dadurch gekennzeichnet, dass** die Kopfstelle (T) die von den Empfängern geschickten Noten abgleicht und mindestens eine optimale Sendekonfiguration für die Empfänger bestimmt, die sich in mindestens einem Empfangsbereich befinden, der sich in der Abdeckung einer selben Sendergruppe befindet.

7. Verfahren nach Anspruch 5 oder 6, **dadurch gekennzeichnet, dass** die Kopfstelle (T) die Sendekonfiguration in mindestens einem Empfangsbereich verändert, um sie an die optimale Konfiguration des Empfangsbereichs anzupassen.

8. Verfahren nach Anspruch 1, **dadurch gekennzeichnet, dass** das Netz ein UMTS-LTE-Netz ist und dass mindestens eine gemäß einem MIMO- oder MISO-Protokoll, insbesondere MISO Alamouti-Protokoll, zu testende Sendekonfiguration auf ein in Ressourcenblöcken mit einem Kopf, der mindestens die Sendekonfiguration anzeigt, welcher der Ressourcenblock entspricht, übertragenes Testnachrichtenproben angewendet wird.

9. Verfahren nach Anspruch 8, **dadurch gekennzeichnet, dass** jeder Empfänger, der mit einem derartigen Kopf ausgestattete Ressourcenblöcke empfängt, für mindestens eine der zu testenden Konfigurationen und ausgehend vom Inhalt des oder der Ressourcenblöcke mindestens eine Note erstellt, die der Empfangsqualität gemäß mindestens einem gegebenen Qualitätskriterium entspricht, wobei die Noten den zu testenden Konfigurationen entsprechen, oder eine Auswahl von Noten, die den höchsten Leistungen entsprechen, oder eine Information über die oder Sendekonfigurationen mit der besten Qualitätsleistung, gesendet von jedem der Empfänger mit einem Identkopf, der mindestens die Sendekonfiguration angibt, der der Ressourcenblock entspricht, und Informationen über die Lokalisierung des Empfängers, an eine Mobilitätsverwaltungseinheit (MME) des UMTS-LTE-Netzes oder eine mit dieser funktional verbundene Entität.

10. Verfahren nach Anspruch 8 oder 9, **dadurch gekennzeichnet, dass** die Mobilitätsverwaltungseinheit (MME) nach Abgleich der von den Empfängern gesendeten Noten mindestens eine optimale Sendekonfiguration für die Empfänger bestimmt, die sich in mindestens einem Empfangsbereich befinden, der sich in der Abdeckung einer selben Sendergruppe befindet.

11. Verfahren nach Anspruch 10, **dadurch gekennzeichnet, dass** die Mobilitätsverwaltungseinheit (MME) die Sendekonfiguration in mindestens einem Empfangsbereich anpasst, damit sie der optimalen Konfiguration in dem Empfangsbereich entspricht.

12. Testempfänger für ein Netz vom Typ mit Einzelfrequenz (SFN), in welchem eine Vielzahl von Sendern (TX1, TX2, TX3, TX4) Signale gemäß einer Sendekonfiguration aus einer Vielzahl von Sendekonfigurationen (C1-C8) senden, wobei der Testempfänger **dadurch gekennzeichnet ist, dass** er ausgebildet ist, um ein oder mehrere, von der Vielzahl von Empfängern gesendete Testnachrichtenproben zu empfangen und zu dekodieren, wobei jede der einen oder mehrere Testnachrichtenproben einer zu testenden Konfiguration entspricht, die aus mindestens einigen möglichen Sendekonfigurationen ausgewählt ist, wobei jede Testnachrichtenprobe einen Kopf aufweist, der erlaubt, die Sendekonfiguration zu identifizieren, der sie entspricht, wobei der Empfänger ausgebildet ist, um für mindestens eine dieser Testproben mindestens einen für die Qualität des Empfangs der Sendekonfiguration repräsentativen Parameter zu erzeugen, der ihnen entspricht.

13. Testempfänger nach Anspruch 12, **dadurch gekennzeichnet, dass** er ein Qualitätsmodul (QMOD) umfasst, um Qualitätsmessungen von empfangenen Testnachrichtenproben durchzuführen, von denen jede einer zu testenden Sendekonfiguration entspricht.

14. Testempfänger nach Anspruch 13, der ebenfalls einen Speicherplatz (MEM) zum Speichern der von dem Qualitätsmodul erzeugten und für die Qualität jeder Testnachrichtenprobe repräsentativen Noten, sowie eine Komparator (COMP) zum Identifizieren der Sendekonfiguration(en) mit der besten Qualitätsleistung umfasst.

15. Testempfänger nach einem der Ansprüche 12 bis 14, der ebenfalls ein Kommunikationsmittel umfasst, um an eine Kopfstelle (T) oder an eine Mobilitätsverwaltungseinheit (MME) zu übertragen:
- von dem Qualitätsmodul erzeugte und für die Qualität von mindestens einer Testnachrichtenprobe mit den besten Qualitätsleistungen repräsentative Noten oder eine Information über die Sendekonfiguration(en) mit der besten Qualitätsleistung, und
- eine geografische Lokalisierungsinformation des Empfängers.

16. Testempfänger nach einem der Ansprüche 12 bis 15, der Mittel zum Extrahieren der Testnachrichten von FEF-Rastern eines empfangenen UMTS-LTE-Signals oder ein Mittel zum Extrahieren der Testnachrichten aus Ressourcenblöcken eines empfangenen UMTS-LTE-Signals umfasst.

17. Testempfänger nach einem der Ansprüche 12 bis 16, wobei das Qualitätsmodul ausgebildet ist, um aus den Testnachrichten Kennungen von Qualitätskriterien zu extrahieren und um die entsprechenden Qualitätskriterien zu messen.

18. System, umfassend eine Kopfstelle (T) eines DVB-T2-Netzes vom Typ mit Einzelfrequenz (SFN), **dadurch gekennzeichnet, dass** das Netz Testempfänger (RX) nach einem der Ansprüche 15 bis 17 umfasst und dass das System Mittel zum Senden (TX1, TX2, TX3, TX4) einer oder mehrerer Testnachrichtenproben (FEJ-Cj) aufweist, von denen jede einer zu testenden Konfiguration entspricht, die aus mindestens einigen der möglichen Sendekonfigurationen (C1-C8) ausgewählt ist, wobei jede Testnachrichtenprobe einen Kopf aufweist, der erlaubt, die Sendekonfiguration zu identifizieren, der sie entspricht, wobei der Netzkopf umfasst:
- ein Kommunikationsmittel, um Noten oder Informationen über die Sendekonfiguration(en) mit der besten Qualitätsleistung zu sammeln, die von den Testempfängern gesendet wurden, und
- ein Bestimmungsmittel mindestens einer optimalen Sendekonfiguration für die Empfänger, die sich in mindestens einem Empfangsbereich befinden, der sich in der Abdeckung einer selben Sendergruppe befindet.

19. System nach Anspruch 18, **dadurch gekennzeichnet, dass** die Kopfstelle (T) ebenfalls ein Mittel aufweist, um die Sendekonfiguration in mindestens einem Empfangsbereich zu verändern, damit sie der optimalen Konfiguration des Empfangsbereichs entspricht.

20. System, umfassend eine Mobilitätsverwaltungseinheit (MME) eines UMTS-LTE-Netzes vom Typ mit Einzelfrequenz (MBSFN), **dadurch gekennzeichnet, dass** das Netz Testempfänger (RX) nach einem der Ansprüche 15 bis 17 umfasst und dass das System Mittel zum Senden (TX1, TX2, TX3, TX4) einer oder mehrerer Testnachrichtenproben (FEJ-Cj) aufweist, von denen jede einer zu testenden Konfiguration entspricht, die aus mindestens einigen der möglichen Sendekonfigurationen (C1-C8) ausgewählt ist, wobei jede Testnachrichtenprobe einen Kopf aufweist, der erlaubt, die Sendekonfiguration zu identifizieren, der sie entspricht, wobei die Mobilitätsverwaltungseinheit umfasst:
- ein Kommunikationsmittel, um Noten oder Informationen über die Sendekonfiguration(en) mit der besten Qualitätsleistung zu sammeln, die von den Testempfängern gesendet wurden, und
- ein Bestimmungsmittel mindestens einer optimalen Sendekonfiguration für die Empfänger, die sich in mindestens einem Empfangsbereich befinden, der sich in der Abdeckung einer selben Sendergruppe befindet.

21. System nach Anspruch 20, **dadurch gekennzeichnet, dass** die Mobilitätsverwaltungseinheit (MME) ebenfalls ein Mittel zum Verändern der Sendekonfiguration in mindestens einem Empfangsbereich aufweist, um sie an die optimale Konfiguration des Empfangsbereichs anzupassen.

## Claims

1. A method of transmitting by optimal distribution on a network of the single-frequency type (SFN) in which a plurality of transmitters (TX1, TX2, TX3, TX4) send signals toward receivers (RX) according to a transmission configuration, from among a plurality of transmission configurations (C1-C8), said method being **characterized in that** it includes:
- transmitting one or several test message samples (FEJ-Cj), each of which corresponds to a configuration to be tested (Cj) chosen from among at least some of the possible transmission configurations, each test message sample having a header making it possible to identify the transmission configuration to which it corresponds,
- receiving and decoding, by at least some of said receivers, of said test samples to generate, for at least one of these test samples, at least one parameter representative of the reception quality of the transmission configuration corresponding to them.

2. The method according to claim 1, **characterized in that** the network is a SFN DVB-T2 network allowing a plurality of transmission configurations of the network resulting from a plurality of configurations of the network resulting from a plurality of possible transmissions on each antenna according to a MIMO or MISO protocol, in particular a MISO Alamouti protocol, and **in that** at least one configuration to be tested is applied to a test message sample sent in the FEF frames, called FEF test frames and temporally inserted between the DVB-T2 frames with a header indicating at least the transmission configuration to which said FEF test frame and/or DVB-T2 frame corresponds.

3. The method according to claim 2, **characterized in that** said header includes an identifier of at least one quality criterion to be used in the receivers.

4. The method according to claim 2 or 3, **characterized in that** the data transmitted in said DVB-T2 frames for a transmission in a DVB-T2 stream of the same information as that contained in said FEF test frame are used to test the transmission configuration, indicated in the DVB-T2 signal, which is used for all of the DVB-T2 frames of a super-frame.

5. The method according to one of claims 2 to 4, **characterized in that** each receiver that receives the FEF and/or DVB-T2 frames, provided with such a header, develops, for each of the configurations to be tested and from the content of said FEF and/or DVB-T2 frames, at least one score corresponding to the reception quality according to at least one given quality criterion, the score(s) corresponding to the configurations to be tested or a selection of scores corresponding to the highest performance levels, or information indicative of the transmission configuration(s) having the best quality performance, being sent to a network head (T) by each of the receivers with an identification header at least providing the transmission configuration to which said FEF and/or DVB-T2 frame corresponds and information relative to the location of said receiver.

6. The method according to claim 5, **characterized in that** said network head (T) collates the scores sent by the receivers and determines at least one optimal transmission configuration for the receivers situated in at least one reception zone situating within the coverage of a same group of transmitters.

7. The method according to claim 5 or 6, **characterized in that** the network head (T) modifies the transmission configuration in at least one said reception zone to cause it to correspond to said optimal configuration of said reception zone.

8. The method according to claim 1, **characterized in that** the network is a UMTS-LTE network and **in that** at least one transmission configuration to be tested according to a MIMO or MISO protocol, in particular MISO Alamouti, is applied to a test message sample sent in resource blocks, with a header indicating at least the transmission configuration to which said resource block corresponds.

9. The method according to claim 8, **characterized in that** each receiver that receives resource blocks provided with such a header develops, for at least one of the configurations to be tested, and from the content of said resource block(s), at least one score corresponding to the reception quality according to at least one given quality criterion, said scores corresponding to the configurations to be tested or a selection of scores corresponding to the highest performance levels, or a piece of information indicative of the transmission configuration(s) having the best quality performance being sent by each of the receivers with an identification header providing at least the transmission configuration to which said resource block corresponds and information relative to the location of said receiver, to a mobility management entity (MME) of the UMTS-LTE network, or to an entity functionally connected thereto.

10. The method according to claim 8 or 9, **characterized in that** the mobility management entity (MME), after collation of the scores sent by the receivers, determines at least one optimal transmission configuration for the receivers situated in at least one reception zone situated within the coverage of a same group of transmitters.

11. The method according to claim 10, **characterized in that** the mobility management entity (MME) modifies the transmission configuration in at least one said reception zone to cause it to correspond to said optimal configuration in said reception zone.

12. A test receiver intended for a network of the single-frequency type (SFN) in which a plurality of transmitters (TX1, TX2, TX3, TX4) transmit signals according to a transmission configuration, from among a plurality of transmission configurations (C1-C8), said test receiver being **characterized in that** it is suitable for receiving and decoding one or several test message samples sent by said plurality of transmitters, each of said one or several test message samples corresponding to a configuration to be tested chosen from among at least some possible transmission configurations, each message sample having a header making it possible to identify the transmission configuration to which it corresponds, said receiver being suitable for generating, for at least one of these test samples, at least one parameter representative of the reception quality of the transmission configuration that corresponds thereto.

13. The test receiver according to claim 12, **characterized in that** it comprises a quality module (QMOD) to take quality measurements on received test message samples, each of which corresponds to a transmission configuration to be tested.

14. The test receiver according to claim 13, also comprising a memory area (MEM) to record scores generated by said quality module and representative of the quality of each said test message sample, as well as a comparator (COMP) to identify the transmission configuration(s) having the best quality performance.

15. The test receiver according to one of claims 12 to 14, also comprising a communication means to send a network head (T) or a mobility management entity (MME):
- scores generated by said quality module and representative of the quality of at least the test message samples having the best quality performance levels, or information indicative of the transmission configuration(s) having the best quality performance, and
- geographical location information of the receiver.

16. The test receiver according to one of claims 12 to 15, comprising means for extracting said FEF frame test messages of a received DVB-T2 signal or a means for extracting said test messages from resource blocks of a received UMTS-LTE signal.

17. The test receiver according to one of claims 12 to 16, wherein said quality module is suitable for extracting said test messages from quality criteria identifiers, and measuring the corresponding quality criteria.

18. A system comprising a network head (T) of a DVB-T2 network, of the single-frequency type (SFN), **characterized in that** said network comprises test receivers (RX) according to any one of claims 15 to 17, and **in that** said system includes means (TX1, TX2, TX3, TX4) for transmitting one or several test message samples (FEJ-Cj), each of which corresponds to a configuration to be tested chosen from among at least some possible transmission configurations (C1-C8), each test message sample having a header making it possible to identify the transmission configuration to which it corresponds, said network head comprising:
- a communication means for collecting scores or information indicative of the transmission configuration(s) having the best quality performance sent by the test receivers, and
- a means for determining at least one optimal transmission configuration for the receivers situated in at least one reception area situated within the coverage of a same group of transmitters.

19. The system according to claim 18, **characterized in that** the network head (T) also includes a means for modifying the transmission configuration in at least one said reception zone to cause it to correspond to said optimal configuration of said reception zone.

20. A system comprising a mobility management entity (MME) of a UMTS-LTE network of the single-frequency type (MBSFN), **characterized in that** said network comprises test receivers (RX) according to any one of claims 15 to 17 and **in that** said system includes means (TX1, TX2, TX3, TX4) for transmitting one or several test message samples (FEJ-Cj), each of which corresponds to a configuration to be tested chosen from among at least some possible transmission configurations (C1-C8), each test message sample having a header making it possible to identify the transmission configuration to which it corresponds, said mobility management entity comprising:
- a communication means for collecting scores or information indicative of the transmission configuration(s) having the best quality performance sent by the test receivers, and
- a means for determining at least one optimal transmission configuration for the receivers situated in at least one reception zone situated within the coverage of a same group of transmitters.

21. The system according to claim 20, **characterized in that** the mobility management entity (MME) also includes a means for modifying the transmission configuration in at least one said reception zone to cause it to correspond to said optimal configuration of said reception zone.
